# EUROPEAN PATENT SPECIFICATION

(11) **EP 2 947 234 B1**
(45) Date of publication and mention of the grant of the patent: **08.07.2020**
(21) Application number: 15168376.0
(22) Date of filing: 20.05.2015
(51) Int. Cl.: E04F 13/08, F16B 5/06, E04F 13/14

(54) **CLIP**
KLEMME
CLIP

(30) Priority: 23.05.2014 EP 14169760
(43) Date of publication of application: 25.11.2015
(73) Proprietor: Eternit NV, 1880 Kapelle-op-den-Bos (BE)
(72) Inventor: FRÜH, Frank, 72654 Neckartenzlingen (DE)
(74) Representative: Vaeck, Elke

(56) References cited:
- GB-A- 1 291 690
- US-A- 4 467 578
- US-A1- 2006 272 261
- US-A1- 2012 241 574
- "Cedral Weatherboard: Cedral Click - clip detail", MarleyEternit , 28 August 2013 (2013-08-28), XP002731909, Retrieved from the Internet: URL:http://www.weather-board.co.uk/cedral- click-installation/ [retrieved on 2014-10-30]

## Description

### Field of the invention

The present invention relates to a clip suitable for mounting cementitious boards to a frame, such as in particular for mounting fiber cement boards or sidings to a support, typically a wooden support.

### Background of the invention

Cementitious boards, in particular fiber cement boards or sidings, are well known nowadays for providing a low maintenance facade for houses, offices, buildings etc., often to replace wooden or maintenance intensive alternatives.

Compared to wooden alternatives, such cementitious boards, like fiber cement sidings, are stiff and heavy.
As such it requires special mounting systems to mount these and keep these boards fixed to walls.

Typically a frame, often a metal such as an aluminum or galvanized steel frame, but most preferred a wooden support structure or frame is fixed to the load bearing wall, to which frame the boards are fixed.

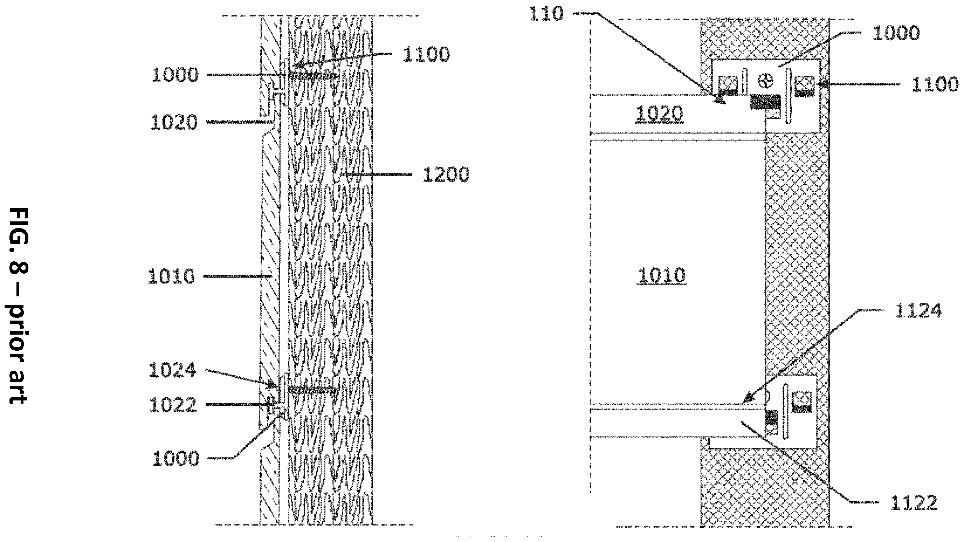

Mounting aids and clips are known to provide a more easily mounting. An example of such clips are the "Cedral Click" clips, available from Eternit NV, Belgium, as shown in figure 8. These clips 1000 provide the possibility to mount fiber cement sidings 1010 , which have a substantially rectangular cross section with at both sides a tapered profile, at the top side of the siding the tapered edge 1020 being present at the face side of siding. At the opposite, lower side of the siding a tapered edge 1022, combined with a slit 1024 to receive a hook 1100 of the clip 1000, is provided at the backside. The edges are so shaped that the lower tapered edge can overlap and hide the tapered edge at the top side of the adjacent, lower siding, once mounted.
When this clip 1000 is screwed to the wooden frame 1200, the clip may bend over a vertical axis, causing the two hooks 1100 and 1110 to lift from the surface of the wooden frame. The hooks are not longer aligned parallel to the fiber cement board and/or do not longer fit tightly in the slit 1024 and may cause problems of mounting and maintaining the siding 1010 hooked on the clips over time.

Clips for mounting cementitious boards are known for example from the internet site https://www.weather-board.co.uk/cedral-click-installation/, showing a detail of a fastening clip for "Cedral Weatherboard" exterior sidings. The fastening member comprises two upwardly extended portions and one central downwardly extended portion for supporting the exterior panel. For fixing the fastening member to the building frame with screws, one screw hole is present in the base plate of the fastening member. The fastening member comprises two vertical bulges at its front surface provided in a direction parallel to the mounting direction of the board in the clip.
US2006/272261 and US2012/241574 also disclose clips for mounting cementitious boards.
US 2006/272261 discloses a fastening member for fastening exterior panels to a building frame. The fastening member comprises two upwardly extended portions and one central downwardly extended portion for supporting the exterior panel. Supporting portions are provided specifically at the outer side edge portions of the fastening member. For fixing the fastening member to the building frame with screws, at least three screw holes are present in the base plate of the fastening member.
US 2012/241574 discloses an external material clamp comprising a fixed plate with a having three support plates for supporting external materials in the vertical direction, thereby forming the exterior wall of a building. The clip comprises one fixation rib for reinforcing the fixed plate of the clip. The fixation rib is formed over a lateral direction of the fixed plate. The clip further comprises at least six fixation holes for fixing the plate to the foundation of the wall.
For both clips disclosed in US 2006/272261 and US 2012/241574, installation of building panels is time-consuming and laborious since three to six screws have to be inserted for each clip to be fixed.
GB1291690 discloses fastening clips particularly suitable for use with wall panels having a soft core of inferior wood. The clip consists of a U-shaped plate with a web, a lower leg provided with horizontal ribs and a nail hole, and an upper leg exclusively consisting of a plurality of teeth extending over the lower leg.
However, these clips are not suitable for cementitious boards, which are about 1.5 to 2 times heavier than their wooden counterparts.
US4467578 discloses fasteners that may be employed in the assembly of common wallboard panels, such as paper or polymer wrapped gypsum wallboard, onto common wall substructures, such as framing members of wood or metal, in the forms of studs and furring runners. The wallboard fastener clip comprises a substantially coplanar and directly continuous spacing base portion, having, spaced apart longitudinal rails, which contact a back major surface of a wallboard panel when the fastener is installed. The clip also comprises tab means, which are suitable for entering the side of a wallboard panel to which the clip is to be appended. One opening is present for nailing or screwing the clip to a building frame. Also, these clips are not suitable for cementitious boards, which are about 2 to 5 times heavier than wallboards for interior applications.

In view of the above, there is a need for innovative clips that are suitable for mounting heavy building boards, such as cementitious panels, and which clips are easy, efficiently and quickly to fix.

### Summary of the invention

It is an object of the present invention to provide a clip which gives higher dimensional stability during mounting on a frame, in particular a wooden frame. The clip reduces the tendency to bending and lifting of its hook-shaped carrying means upwards from the frame surface.

It is an advantage of the present invention to provide a clip which avoids the above-mentioned drawback of the existing clips.

According to the present invention, a clip suitable for mounting cementitious boards to a frame is provided, according to claim 1.

With fastener is to be understood any means that is able to mechanically fix the clip to an underlying support, such as a screw, nail, rivet or alike.
The support or supporting structure can be a metal (e.g. aluminum, steel or stainless steel) support, or a wooden frame, typically a soft wooden structure or frame.
The axis coinciding with the aperture is understood as the axis coinciding with the center point of the aperture.
The bulge extending from a first point to a second, different point in fact causes a bulge to stretch out from a first point to a second point, these points being the extrema or outer ends of the bulge.

The sheet may be provided from metal, such as steel, aluminum alloy, cupper alloy, stainless steel, and alike, or out of polymer such as polyamide (PA), polyester (PES), polyethylene (PE), polypropylene (PP) or acrylonitrile-butadiene-styrene (ABS), or alike.

The thickness of the surface is to be sufficiently strong and stiff to be able to carry the weight of the cementitious boards or sidings, and to withstand occurring wind loads and may depend on the type of material used to provide the clip.
Typically the thickness of said clip is in the range of about 0.4 to about 1 mm inclusive, such as in the range of about 0.5 to about 0.8 mm, such as about 0.5mm, about 0.55mm, about 0.6mm, about 0.65mm, about 0.7mm and about 0.75mm.
When a steel surface is used, the thickness of the steel surface may vary between about 0.4 to about 1 mm inclusive, such as in the range of about 0.5 to about 0.8 mm, such as about 0.5mm, about 0.55mm, about 0.6mm, about 0.65mm, about 0.7mm and about 0.75mm.
Most preferably stainless steel, such as stainless steel of type A2 or A4, e.g. AISI 302 or AISI 304 type stainless steel, such as AISI 304 Werkstoff-nr 1.4310, is used.

With substantially flat back surface is understood that this surface is planar, i.e. that, next to the dents which may be provided to obtain the bulges, the back surface of the sheet has no other protrusions or thickening at the back surface.
The bulge or bulges provided according to the invention causes that, when the fastener are driven too deep in to the underlying support structure, e.g. wooden frames, the clip has less tendency to bend around this axis, causing the two hook-shaped carrying means to lift upwards in the direction of the front surface of the sheet. Such lift may cause the hook-shaped carrying means no longer to fit correctly or correctly enough with the surface of the board to be carried along the provided contact surface. The provision of the bulge or bulges, cause the so-called momentum of inertia of the sheet to increase.

The bulge, or "bend" typically is provided by a corresponding dent created at the back surface of the sheet. According to the invention the clip comprises a sheet having additional bulges at its front surface. These bulges may be provided for pressing the contact surface of the cementitious boards to be fixed with the clip, to the hook-like carrying means. Such bulges, are provided in a direction parallel to the mounting direction of the board in the clip, and substantially parallel to the axis coinciding with the aperture and the point on said front surface being at minimum but equidistant to the hook-shaped carrying means.
Optionally, these additional bulge or bulges, may form one integral bulge, together with the bulge extending from a first point of the front surface at one side of the axis to a second point of the front surface at the other side of the axis.
The provision of such bulges may create a recession in which the fastener or fastening means (like a screw or rivet) can be sunken.

According to some embodiments of the invention, the bulge may be U-shaped, the lower section of the U-shape intersecting with said axis.

According to the invention, at least a third bulge is provided at said front surface, the bulge extending from a first point of the front surface at one side of the axis to a second point of the front surface at the other side of the axis, the sheet being uninterrupted along this third bulge.

According to some embodiments, the aperture is positioned between the third bulge and the point on said front surface being at minimum but equidistant to said hook-shaped carrying means.

According to the invention the first and second bulges are provided at opposite sides of the aperture.

The circumference of the sheet of the clip may have any shape, however typically is polygonal, typically rectangular, square, elliptic or even round, shaped. The corners of the polygonal shape may be rounded.

According to some embodiments of the invention, the hook-shaped carrying means may form an integral part with the sheet, the hook-shaped carrying means being bent out of the sheet.

The hook-shaped carrying means may be provided by making a U- or V-shape slit in the sheet, and bending the lip being so provided, over a first angle up to about 150° (and typically about 90°) upwards, i.e. front surface of the sheet, around the connection between the lip and the sheet, and plying said bended lip again round an axis substantially parallel to the connection between the lip and the sheet, over again a second angle such that part of the outer part of the lip is parallel or slightly inclined in view of the front surface of the sheet.

Optimally, additional to the two hook-shaped carrying means, additional similar or different hook-shaped carrying means may be provided.

According to embodiments of the present invention, the clip comprises three hook-shaped carrying means, all being provided by making a U -shape slit in the sheet, and bending the lips being so provided, over an angle of about 90° upwards, i.e. front surface of the sheet, around the connection between the lip and the sheet, and plying said bended lip again round an axis substantially parallel to the connection between the lip and the sheet, over again a second angle of about 90° such that part of the outer part of the lip is substantially parallel in view of the front surface of the sheet. The sheet of the clip has a substantially rectangular circumference, two of the hook-shaped carrying means are provided with their concavity oriented to one of the long sides of the rectangular shape, the third hook-shaped carrying means being provided with its concavity oriented to the other of the long sides of the rectangular shape. The connections between the lip and the sheet are all substantially coaxial.

These bending actions may be done in one bending process step or in different steps. The cutting of the U- or V-shaped slits may be done by punching or cutting, such as laser cutting or cutting with appropriate cutting blades.

According to the invention, the at least one third bulge has a thickness of about 0.5 to about 2mm.

The thickness of the bulge is to be understood as the maximum distance, in a direction perpendicular to the front surface of the sheet, between the front surface of the sheet adjacent the bulge and the points along the surface of the bulge.

More preferred, the at least one third bulge may have a thickness of about 0.6 to about 1.8mm, even having a thickness in the range of about 0.7 to about 1.6mm, such as about 0.8mm, about 0.9mm, about 1.0mm, about 1.1mm, about 1.2mm, about 1.3mm, about 1.4mm, about 1.5mm, about 1.6mm or about 1.7mm.

The hook-shaped carrying means may have a distance between carrying part, in particular the upstanding carrying part, of the hook shaped carrying means and the sheet of about 2mm to about 10mm, such as between about 3mm and about 8mm, e.g. about 5.5 mm or about 6.9mm.

The height of the upstanding part of the hook shaped carrying means may vary between about 2mm and about 8mm, such as between about 3 and about 7mm, e.g. about 3mm, about 3.1mm, about 3.2mm, about 3.3mm, about 6.2mm, about 6.3mm, about 6.4mm, about 6.5mm, about 6.6mm or about 6.7mm

The width of the upstanding part of the hook shaped carrying means may vary between about 4mm and about 20mm, such as between about 5mm and about 18mm, e.g. about 6mm, about 7mm, about 8mm, about 9mm, about 10mm, about 11mm, about 12mm, about 13mm, about 14mm, about 15mm, about 16mm or about 17mm.

The aperture typically, but not necessarily, is of circular shape and may have a diameter in the range of about 2 to about 8mm, typically in the range of about 3 to about 7mm, such as about 3.5mm, about 4mm, about 4.2mm, about 4.5mm or about 5mm.

The sheet may preferably have a substantially square or rectangular shape, with sides having a length of about 20 to about 110mm, -such as a long side of about 30 to about 100 mm, typically between about 50 and about 80mm, e.g. about 55mm, about 60mm, about 65mm or about 70mm. The short side may vary between about 20 and about 50mm, such as between about 30 and about 40mm, e.g. about 31mm, about 32mm, about 33mm, about 34mm, about 35mm, about 36mm, about 37mm, about 38mm or about 39mm.

The first and second point between the bulge extend or stretch out, are preferably on a distance of about 18 to 95mm one from the other, typically between about 25 and about 85mm, such as between about 43 and about 70mm, e.g. about 47, about 48, about 49, about 50, about 51, about 52 or about 53 mm.

The bulge is typically substantially straight or linear, or slightly bent.

The clips according to the first aspect of the invention may be used to mount cementitious boards, such as fiber cement boards, to support systems, typically frames in aluminum, steel or wood.

Fiber cement boards or products are well known in the art. The fiber cement boards are made out of fiber cement slurry, which is formed in a so-called green fiber cement product, and cured.

Dependent to some extent on the curing process used , the fiber cement slurry typically comprises water, process or reinforcing fibers which both may be natural organic fibers (typically cellulose fibers) or synthetic organic fibers (polyvinylalcohol, polyacrilonitrile, polypropylene, polyamide, polyester, polycarbonate, polyethylene, etc.), cement e.g. Portland cement, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives. Optionally, a color additive (e.g. pigments) are added, to obtain a fiber cement product which is so-called colored in the mass.
The green fiber cement board is cured, typically by curing to the air (air cured fiber cement products) or under pressure in presence of steam and increased temperature (autoclave cured). For autoclave cured products, typically sand is added in the fiber cement slurry. The autoclave curing typically results in the presence of 11.3 Å (angstrom) Tobermorite in the fiber cement board.
Fiber cement boards, also referred to as fiber cement sheets or fiber cement panels, usually are made using the well known Hatschek-process, flow-on process or Magnani-process.
The fiber cement board may be obtained by first providing a green fiber cement board, which is subjected to compression, before curing, i.e. by air curing or autoclave curing.
The "green" fiber cement board, after being made by the Hatschek-process, may be first pre-cured to the air, after which the pre cured board is further air cured until it has its final strength, or autoclave cured using pressure and steam, to give the board its final properties.

Typical properties are thicknesses of the board, which may vary from 4mm to 20mm, such as from 7.0 mm to 13.0 mm. The density of the boards may vary from 0.5 kg/dm³ to 2.2 kg/dm³, such as from 0.6 kg/dm³ to 2.0 kg/dm³. The dimensions of the board, next to the thickness, may vary from about 1 meter to about 1.7 meter in width and 1 meter to 3.6 meter in length. When the fiber cement boards are used as sidings, the boards typically are rectangular, optionally foreseen of recesses for receiving the carrying means, or a tongue and groove means, the rectangle having a short side in the range of 150 to 600mm, the long side may range up to 4m. Typical dimensions are 150 to 400mm by 3.6m or less, such as 150 to 190mm by 3.6m or less.

The clips according to the invention are of particular use for mounting of sidings, such as fiber cement sidings. Typically such fiber cement sidings may be autoclaved fiber cement boards, optionally provided with recesses, tapered edges, slits and alike to facilitate mounting by means of the clips. The sidings may be provided with a design, typically a profiled design of the face side, imitating a wood structure. This design may be provided by grinding and milling after the fiber cement has cured, or by profiling the green sheet, e.g. when using a Hatschek-process, using an accumulating drum with a surface mirroring the wood imitating image, or by using a press to densify the green sheet, having a surface mirroring the wood imitating image.

The present clip is in particular of use for mounting sidings, such as weatherboard and clapboards, hence, to mount sidings having a plank-like shape with a long and a short side.

The frame typically is a steel, aluminum or wooden support structure.

The cementitious board may be a siding. Preferably the cementitious board is a fiber cement board, e.g. siding.

The siding and the clip may be shaped such that, when mounting the siding to the frame, the clips are invisible when looked upon from the side is opposite to the side where the front surface of the clip and the siding contact.

The clips according to the invention may provide the possibility to mount fiber cement sidings having a substantially rectangular cross section with at both sides a tapered profile, at the top side of the siding the tapered edge being present at the face side of siding. At the opposite, lower side of the siding a tapered edge combined with a slit to receive the hook shaped carrying means of the clip, is provided at the backside. The edges are so shaped that the lower tapered edge can overlap and hide the tapered edge at the top side of the adjacent, lower siding, once mounted.

The siding, such as the Cedral Click sidings of Eternit NV, Belgium, are autoclave cured fiber cement boards, provided with a face having a wood-like look, and a density of about 1300 kg/m³. Sidings typically have a density in the range of 1100 to 1700 kg/m³.

According to further aspect of the present invention, a clip according to the first aspect of the present invention is used for mounting cementitious boards to a frame.

The independent and dependent claims set out particular and preferred features of the invention.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

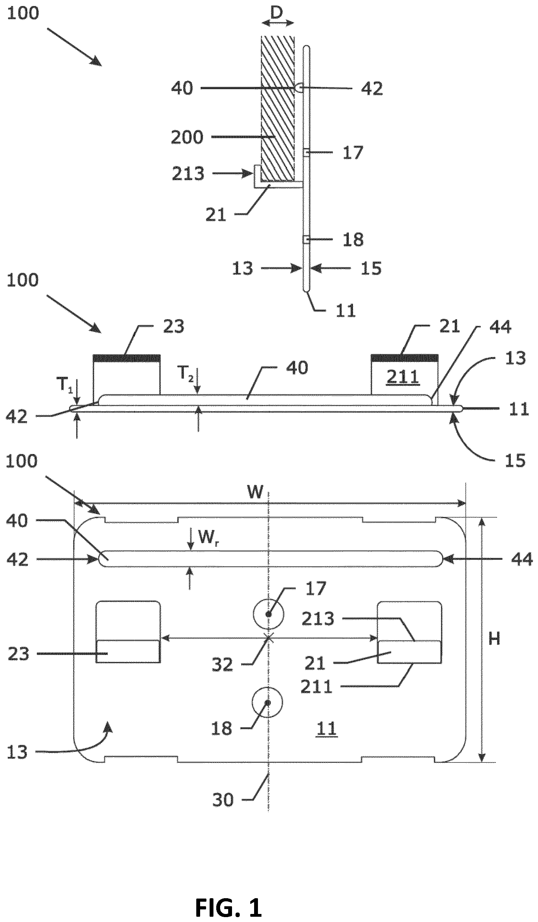

N.B. Fig. 1-4 do not show embodiments of the invention, but are provided as background information.
Fig. 1 is a schematically view of a first clip disclosed herein, in side view, top view and front view.
Fig. 2 is a schematically view of the clip of figure 1, being a side view, when used to mount a fiber cement siding.
Fig. 3 is a schematically view of a second clip disclosed herein, in side view and front view.
Fig. 4 is a schematically view of this second clip disclosed herein, in side view when used to mount a fiber cement siding in visible and invisible mounting.
Fig. 5 is a schematically view of a clip according to the invention, in side view, top view and front view.
Fig. 6 is a schematically view of the clip of figure 5 according to the invention, being a side view, when used to mount a fiber cement siding.
Fig. 7 is a schematically view of a clip according to the invention, in side view, top view and front view.
Fig. 8 is a schematically view of a clip and its use, according to prior art.
The same reference signs refer to the same, similar or analogous elements in the different figures.
In the first figure, a clip 100 as disclosed by the present description is shown in side, top and front view.
This clip comprises a metal sheet 11 (out of AISI 304 stainless steel, Werkstoff-nr 1.4310) having a front surface 13 and a substantially flat back surface 15. There are two apertures 17 and 18, for receiving a fastener, which is typically a screw when the clip is used to mount sidings or boards to a wooden frame. This fastener may be a rivet when a frame out of steel, such as stainless steel or aluminum is provided.
This clip comprises two hook-shaped carrying means 21 and 23 contacting the front surface of the sheet and standing in front of the front surface. These two hook-shaped carrying means are provided by cutting a U-shaped slit and bending the lip 211 to the front side over an angle of 90°, and bending the lip again over 90° such that there is a small piece of sheet 213 which is in parallel to the front surface.
The aperture and these two hook-shaped carrying means defining an axis 30 being parallel to the back surface and which axis coincides with the aperture and the point 32 on the front surface, which point 32 is at minimum distance of, but equidistant to the hook-shaped carrying means.
The sheet comprises at least one bulge 40 at said front surface, which bulge extending from a first point 42 of the front surface, point 42 being at one side of the axis, to a second point 44 of the front surface, which point 44 is at the other side of the axis. The sheet remains uninterrupted along the bulge 40.

The thickness T1 of the sheet is 0.6mm; it has a width W of 60mm and height H 37mm. The bulge is realized by providing a dent at the back surface of the sheet. The dent provides as such a corresponding bulge of height T2 being 1.4mm and width Wr of about 3mm.
The aperture 17, of diameter 4.2mm and centrally positioned along the width W, is located between the bulge 40 and the two hook-shaped carrying means. The second, identical aperture 18 is coaxial with point 32 and first aperture 17.

The bulge 40 is realized by pressing the metal sheet 11 with a press, causing a dent in the back surface 15 of the sheet, and a corresponding bulge at the front surface of the sheet 11.

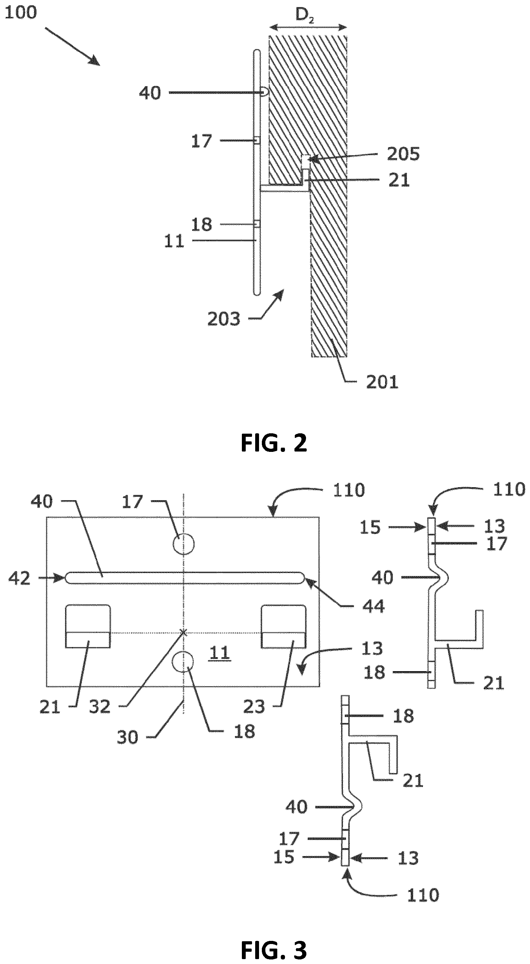

The clip can carry boards 200 having a thickness D of about 5.5mm in its hook-shaped carrying means in case the lips of the hook-shaped carrying means may be visible a the visible side of the board, e.g. a siding made from fiber cement. The thickness D1 is defined by the dimensions of the bulge 40 and the hook-shaped carrying means 21 and 23.
In an alternative use as shown in figure 2, this clip 100 is used to mount sidings in an invisible way; the board 201has at its side contacting the clip, a thinning 203 along a zone, and a recessed slit 205 for receiving the lip of the hook-shaped carrying means 21. Examples of such siding are "Cedral Click" sidings of Eternit NV, Belgium.

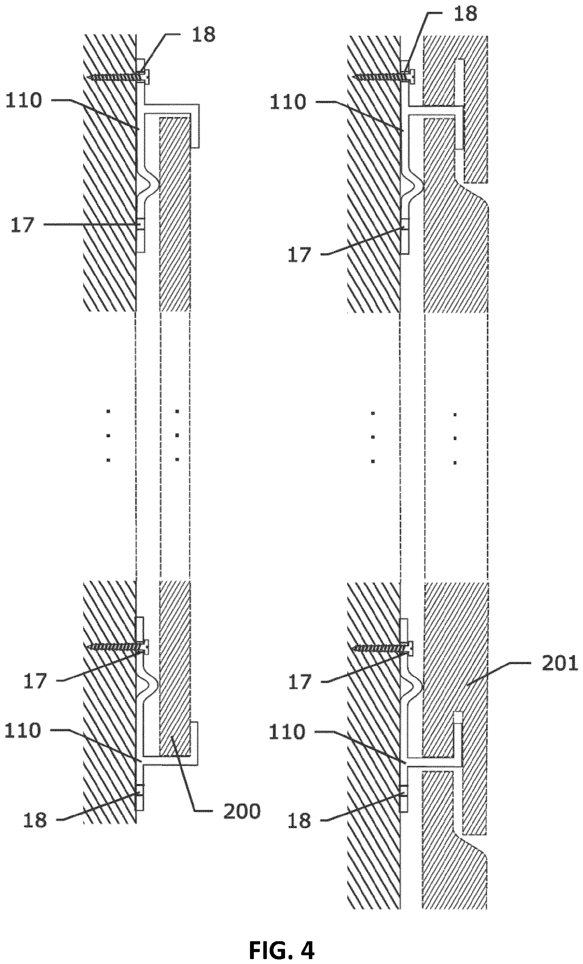

Figure 3 shows an alternative clip 110 in front and side view, where the same figures refer to the same features. The dimensions and materials used are identical as the clip 100. The bulge is positioned between the aperture 17 and the two hook-shaped carrying means.
As is shown in figure 4, this clip 110 can be used to mount a board 200 and 201 at its top and bottom side, with visible or invisible mounting. The boards 200 or 201 are to be positioned in the clips after these have been screwed or fixed to the support.

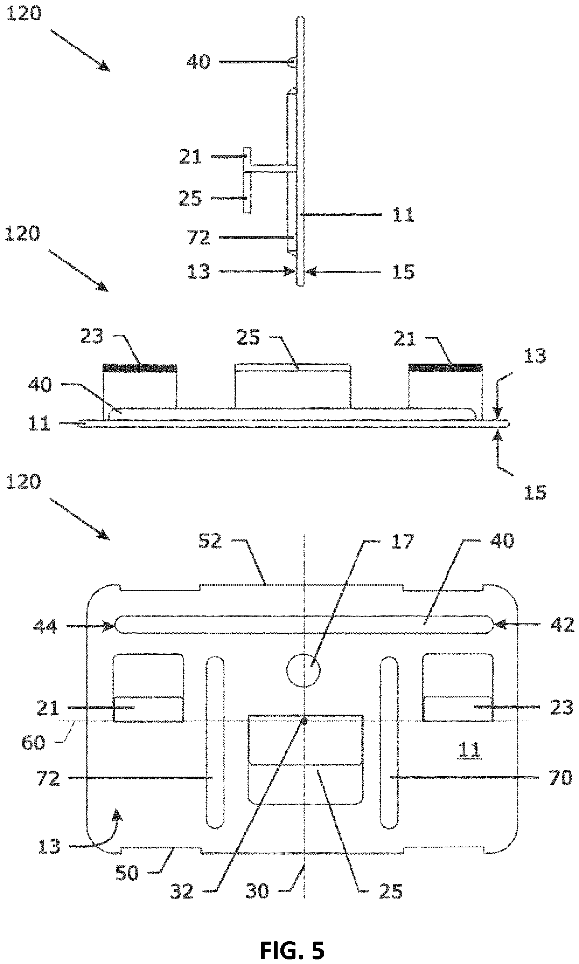

For invisible mounting, a clip 120 according to the present invention as shown in figure 5, is more convenient. For clip 120 the same figures refer to the same features. The dimensions and materials used are identical as the clip 100. The clip according to the present invention further comprises a third hook-shaped carrying means 25, which concave side or opening is oriented to the side 50 of the rectangular shape of the clip 120, whereas the opening or concave side of the means 21 and 23 are oriented to the opposite side 52 of the shape of the clip. The lips of the three hook-shaped carrying means are connected to the sheet 11, these connections being aligned along an axis 60.

The clip according to the present invention has two additional bulges, at its front surface 13, being bulges 70 and 72. They extend in a direction parallel to the axis 30.

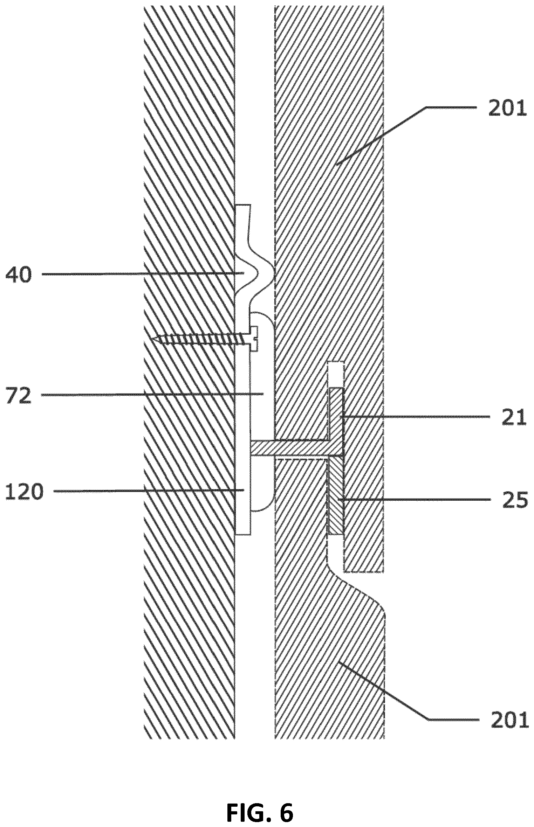

As shown in figure 6, this clip 120 according to the present invention facilitates the mounting of boards 201, such as sidings in fiber cement, using invisible mounting.

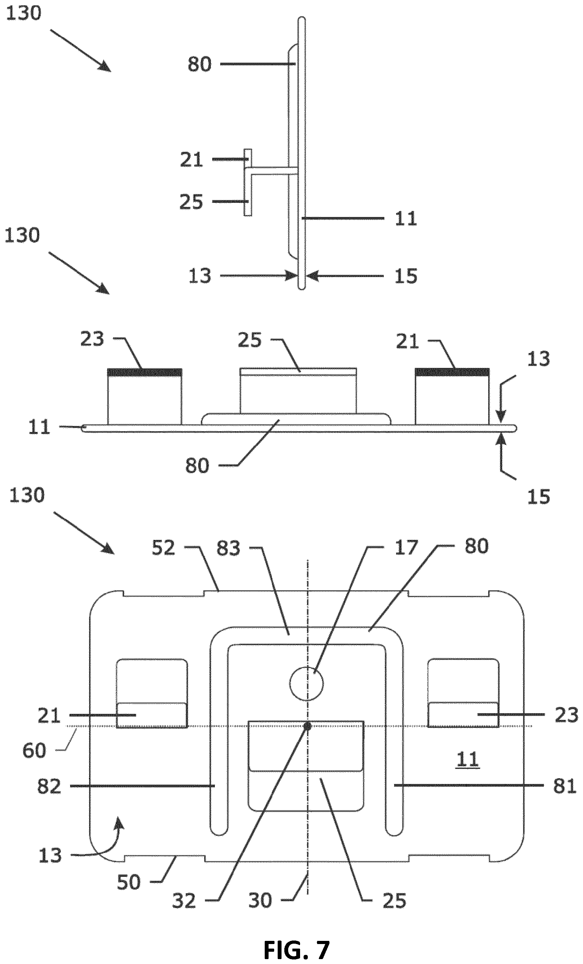

Still another clip 130 according to the present invention is shown in figure 7, which clip is convenient for invisible mounting of sidings. For clip 130 the same figures refer to the same features. The dimensions and materials used are identical as the clip 120.
The clip 130 according to the present invention has one bulge 80 at its front surface 13, being U shaped. The legs 81 and 82 of the U shape are extending parallel to the axis 30. The middle section 83 of the U-shape of the bulge 80 crosses the axis 30. The aperture 17 is located between the bulge 80 where it crosses the axis 30, and the two hook-shaped carrying means 21 and 23.

## Claims

1. A clip (120) suitable for mounting cementitious boards to a frame, said clip comprising,
• A sheet (11) having a front surface (13) and a substantially flat back surface (15), said sheet comprising only one aperture (17) for receiving a fastener;
• At least first, second and third hook-shaped carrying means (21, 23, 25), contacting said front surface of said sheet and standing in front of said front surface; Said aperture (17) and said first and second hook-shaped carrying means (21, 23) defining an axis (30) being parallel to said back surface, said axis coinciding with said aperture and the point (32) on said front surface being at minimum distance to but equidistant to said first and second hook-shaped carrying means; and said sheet comprising at least first and second bulges (70, 72) at its front surface provided in a direction parallel to the mounting direction of the board in the clip and substantially parallel to said axis (30), and being located at opposite sides of said aperture (17) between said first and second hook-shaped carrying means (21, 23, 25);
**characterized in that**
said sheet comprises at said front surface at least a third bulge (40) having a thickness of between about 0.5 and about 2 mm, said third bulge being perpendicular to said axis (30) and extending from a first point (42) of the front surface at one side of said axis to a second point (44) of the front surface at the other side of said axis, the sheet being uninterrupted along said third bulge.

2. The clip (120) according to claim 1, wherein said first and second bulges form one integral bulge, together with said third bulge extending from a first point of the front surface at one side of said axis (30) to a second point of the front surface at the other side of the axis.

3. The clip (120) according to any one of claims 1 or 2, wherein said first and second hook-shaped carrying means (21, 23) have a distance between the upstanding carrying part (213) of the first and second hook shaped carrying means (21, 23) and the sheet of between about 2mm and about 10mm.

4. The clip (120) according to any one of claims 1 to 3, wherein said at least one third bulge (40) has a thickness of about 1.4 mm.

5. The clip (120) according to any of claims 1 to 4, wherein said first and second hook-shaped carrying means (21, 23) have a distance between the upstanding carrying part (213) of said first and second hook shaped carrying means (21, 23) and said sheet (11) of between about 5.5 mm and about 6.9 mm.

6. The clip (120) according to any of claims 1 to 5, wherein the height of said upstanding part (213) of said first and second hook shaped carrying means (21, 23) is between about 2mm and about 8mm and the width of said upstanding part (213) of said first and second hook shaped carrying means (21, 23) is between about 4mm and about 20mm.

7. The clip (120) according to any one of claims 1 to 6, wherein said sheet has a substantially square or rectangular shape, with each side having a length of between about 20 and about 110mm.

8. The clip (120) according to claim 7, wherein said sheet has a substantially square or rectangular shape, with the longest side having a length of between about 30 and about 100mm and the shortest side having a length of between about 20 and about 50mm.

9. The clip (120) according to claim 8, wherein the concave side or opening of said third hook-shaped carrying means (25) is oriented to pone side (50) of the rectangular shape of the clip (120), whereas the opening or concave side of said first and second hook shaped carrying means (21,23) is oriented to the opposite side (52) of the rectangular shape of the clip (120).

10. The clip (120) according to any one of claims 1 to 9, wherein said aperture (17) has a substantially circular shape and a diameter in the range of about 2 to about 8mm.

11. The clip (120) according to claim 2 or any one of claims 3-10 insofar as it depends on claim 2, wherein said integral bulge is U-shaped, the lower section of the U-shape intersecting with said axis.

12. The clip (120) according any one of claims 1 to 11, wherein said aperture (17) is positioned between said third bulge and the point (32) on said front surface being at minimum but equidistant to said first and second hook-shaped carrying means.

13. The clip (120) according any one of claims 1 to 12, wherein said first, second and third hook-shaped carrying means form an integral part with the sheet, said hook-shaped carrying means being bent out of said sheet.

14. Use of a clip (120) according to any one of claims 1 to 13, for mounting cementitious boards to a frame.

## Patentansprüche

1. Klemme (120), die zur Montage zementöser Platten an einen Rahmen geeignet ist, wobei die Klemme umfasst:
• ein Flächenelement (11) mit einer Vorderseite (13) und eine im Wesentlichen ebene Fläche (15), wobei das Flächenelement nur eine Öffnung (17) zum Aufnehmen eines Befestigungselements umfasst;
• mindestens ein erstes, zweites und drittes hakenförmiges Tragemittel (21, 23, 25), die mit der Vorderfläche des Flächenelements in Kontakt stehen und vor der Vorderseite stehen;
wobei die Öffnung (17) und das erste und zweite hakenförmige Tragemittel (21, 23) eine Achse (30) definieren, die parallel zu der Rückseite ist, wobei die Achse mit der Öffnung zusammenfällt und der Punkt (32) auf der Vorderseite sich in einem minimalen, aber gleichen Abstand zu dem ersten und zweiten hakenförmigen Tragemittel befindet; und
wobei das Flächenelement mindestens eine erste und zwei Wölbung (70, 72) an seiner Vorderseite umfasst, die in einer Richtung parallel zur Montagrichtung der Platte in der Klemme und im Wesentlichen parallel zu der Achse (30) vorgesehen sind und auf gegenüberliegenden Seiten der Öffnung (17) zwischen dem ersten und zweiten hakenförmigen Tragemittel (21, 23, 25) angeordnet sind;
**dadurch gekennzeichnet, dass** das Flächenelement mindestens eine dritte Wölbung (40) mit einer Dicke zwischen etwa 0,5 und etwa 2 mm an der Vorderseite aufweist, wobei die dritte Wölbung senkrecht zu der Achse (30) ist und sich von einem ersten Punkt (42) der Vorderseite auf einer Seite der Achse zu einem zweiten Punkt (44) der Vorderseite auf der anderen Seite der Achse erstreckt, wobei das Flächenelement entlang der Rippe ununterbrochen ist.

2. Klemme (120) nach Anspruch 1, wobei die erste und zweite Wölbung eine einstückige Wölbung zusammen mit der dritten Wölbung bilden, die sich von einem ersten Punkt auf der Vorderseite auf einer Seite der Achse (30) zu einem zweiten Punkt der Vorderseite auf der anderen Seite der Achse erstreckt.

3. Klemme (120) nach einem der Ansprüche 1 oder 2, wobei das erste und das zweite hakenförmige Tragemittel (21, 23) einen Abstand zwischen dem aufrecht stehenden Trageteil (213) des ersten und zweiten hakenförmigen Tragemittels (21, 23) und dem Flächenelement zwischen etwa 2 mm und etwa 10 mm aufweisen.

4. Klemme (120) nach einem der Ansprüche 1 bis 3, wobei die mindestens eine dritte Wölbung (40) eine Dicke von etwa 1,4 mm aufweist.

5. Klemme (120) nach einem der Ansprüche 1 bis 4, wobei das erste und das zweite hakenförmige Tragemittel (21, 23) einen Abstand zwischen dem aufrecht stehenden Trageteil (213) des ersten und zweiten hakenförmigen Tragemittels (21, 23) und dem Flächenelement (11) zwischen etwa 5,5 mm und etwa 6,9 mm aufweisen.

6. Klemme (120) nach einem der Ansprüche 1 bis 5, wobei die Höhe des aufrecht stehenden Teils (213) des ersten und zweiten hakenförmigen Tragemittels (21, 23) zwischen etwa 2 mm und etwa 8 mm beträgt und die Breite des aufrecht stehenden Teils (213) des ersten und zweiten hakenförmigen Tragemittels (21, 23) zwischen etwa 4 mm und etwa 20 mm beträgt.

7. Klemme (120) nach einem der Ansprüche 1 bis 6, wobei das Flächenelement eine im Wesentlichen quadratische oder rechteckige Form aufweist, wobei jede Seite eine Länge zwischen etwa 20 und etwa 110 mm aufweist.

8. Klemme (120) nach Anspruch 7, wobei das Flächenelement eine im Wesentlichen quadratische oder rechteckige Form aufweist, wobei die längste Seite eine Länge zwischen etwa 30 und etwa 100 mm aufweist und die kürzeste Seite eine Länge zwischen etwa 20 und etwa 50 mm aufweist.

9. Klemme (120) nach Anspruch 8, wobei die konkave Seite oder Öffnung des dritten hakenförmigen Tragemittels (25) zu einer Seite (50) der rechteckigen Form der Klemme (120) orientiert ist, wohingegen die Öffnung oder konkaven Seite des ersten und zweiten hakenförmigen Tragemittels (21, 23) zu der gegenüberliegenden Seite (52) der rechteckigen Form der Klemme (120) orientiert ist.

10. Klemme (120) nach einem der Ansprüche 1 bis 9, wobei die Öffnung (17) eine im Wesentlichen kreisförmge Form und einen Durchmesser im Bereich von etwa 2 bis 8 mm aufweist.

11. Klemme (120) nach Anspruch 2 oder einem der Ansprüche 3 bis 10 bei Abhängigkeit von Anspruch 2, wobei die einstückige Wölbung U-förmig ist, wobei der untere Abschnitt der U-Form sich mit der Achse schneidet.

12. Klemme (120) nach einem der Ansprüche 1 bis 11, wobei die Öffnung (17) zwischen der dritten Wölbung und dem Punkt (32) auf der Vorderseite positioniert ist, der in einem minimalen, aber gleichen Abstand zu dem ersten und zweiten hakenförmigen Tragemittel liegt.

13. Klemme (120) nach einem der Ansprüche 1 bis 12, wobei das erste, zweite und dritte hakenförmige Tragemittel einstückig mit dem Flächenelement gebildet sind, wobei das hakenförmige Tragemittel aus dem Flächenelement herausgebogen ist.

14. Verwendung einer Klemme (120) nach einem der Ansprüche 1 bis 13 zur Montage von zementöser Platten an einem Rahmen.

## Revendications

1. Clip (120) destiné au montage de panneaux de ciment sur un cadre, ledit clip comprenant,
• Une feuille (11) ayant une surface avant (13) et une surface arrière sensiblement plate (15), ladite feuille comprenant une seule ouverture (17) pour recevoir une fixation ;
• Au moins des premier, deuxième et troisième moyens de support en forme de crochet (21, 23, 25), venant en contact avec ladite surface avant de ladite feuille et se trouvant devant ladite surface avant ;
Ladite ouverture (17) et lesdits premier et deuxième moyens de support en forme de crochet (21, 23) définissant un axe (30) étant parallèle à ladite surface arrière, ledit axe coïncidant avec ladite ouverture et le point (32) sur ladite surface avant étant à une distance minimale mais équidistant auxdits premier et deuxième moyens de support en forme de crochet ; et
ladite feuille comprenant au moins des premier et deuxième renflements (70, 72) au niveau de sa surface avant disposés dans une direction parallèle à la direction de montage du panneau dans le clip et sensiblement parallèle audit axe (30), et étant situés sur des côtés opposés de ladite ouverture (17) entre lesdits premier et deuxième moyens de support en forme de crochet (21, 23, 25) ;
**caractérisé en ce que** ladite feuille comprend au niveau de ladite surface avant au moins un troisième renflement (40) ayant une épaisseur comprise entre environ 0,5 et environ 2 mm, ledit troisième renflement étant perpendiculaire audit axe (30) et s'étendant depuis un premier point (42) de la surface avant d'un côté dudit axe vers un deuxième point (44) de la surface avant de l'autre côté de l'axe, la feuille étant ininterrompue le long dudit troisième renflement.

2. Clip (120) selon la revendication 1, dans lequel lesdits premier et deuxième renflements forment un renflement intégral, conjointement avec ledit troisième renflement s'étendant d'un premier point de la surface avant d'un côté dudit axe (30) à un deuxième point de la surface avant de l'autre côté de l'axe.

3. Clip (120) selon l'une quelconque des revendications 1 ou 2, dans lequel lesdits premier et deuxième moyens de support en forme de crochet (21, 23) ont une distance entre la partie de support verticale (213) des premier et deuxième moyens de support en forme de crochet (21, 23) et la feuille comprise entre environ 2 mm et environ 10 mm.

4. Clip (120) selon l'une quelconque des revendications 1 à 3, dans lequel ledit au moins un troisième renflement (40) a une épaisseur d'environ 1,4 mm.

5. Clip (120) selon l'une quelconque des revendications 1 à 4, dans lequel lesdits premier et deuxième moyens de support en forme de crochet (21, 23) ont une distance entre la partie de support verticale (213) desdits premier et deuxième moyens de support en forme de crochet (21, 23) et ladite feuille (11) comprise entre environ 5,5 mm et environ 6,9 mm.

6. Clip (120) selon l'une quelconque des revendications 1 à 5, dans lequel la hauteur de ladite partie verticale (213) desdits premier et deuxième moyens de support en forme de crochet (21, 23) est comprise entre environ 2 mm et environ 8 mm et la largeur de ladite partie verticale (213) desdits premier et deuxième moyens de support en forme de crochet (21, 23) est comprise entre environ 4 mm et environ 20 mm.

7. Clip (120) selon l'une quelconque des revendications 1 à 6, dans lequel ladite feuille a une forme sensiblement carrée ou rectangulaire, avec chaque côté ayant une longueur comprise entre environ 20 et environ 110 mm.

8. Clip (120) selon la revendication 7, dans lequel ladite feuille a une forme sensiblement carrée ou rectangulaire, avec le côté le plus long ayant une longueur comprise entre environ 30 et environ 100 mm et le côté le plus court ayant une longueur comprise entre environ 20 et environ 50 mm.

9. Clip (120) selon la revendication 8, dans lequel le côté concave ou l'ouverture dudit troisième moyen de support en forme de crochet (25) est orienté vers un côté (50) de la forme rectangulaire du clip (120), tandis que l'ouverture ou le côté concave desdits premier et deuxième moyens de support en forme de crochet (21, 23) est orientée vers le côté opposé (52) de la forme rectangulaire du clip (120).

10. Clip (120) selon l'une quelconque des revendications 1 à 9, dans lequel ladite ouverture (17) a une forme sensiblement circulaire et un diamètre dans la plage d'environ 2 à environ 8 mm.

11. Clip (120) selon la revendication 2 ou l'une quelconque des revendications 3 à 10 dans la mesure où elle dépend de la revendication 2, dans lequel ledit renflement intégral est en forme de U, la section inférieure de la forme en U croisant avec ledit axe.

12. Clip (120) selon l'une quelconque des revendications 1 à 11, dans lequel ladite ouverture (17) est positionnée entre ledit troisième renflement et le point (32) sur ladite surface avant étant au minimum mais équidistant auxdits premier et deuxième moyens de support en forme de crochet.

13. Clip (120) selon l'une quelconque des revendications 1 à 12, dans lequel lesdits premier, deuxième et troisième moyens de support en forme de crochet ne forment qu'une pièce avec la feuille, lesdits moyens de support en forme de crochet étant pliés hors de ladite feuille.

14. Utilisation d'un clip (120) selon l'une quelconque des revendications 1 à 13, pour le montage de panneaux de ciment sur un cadre.
